# EUROPÄISCHE PATENTSCHRIFT

(11) **EP 3 041 355 B1**
(45) Veröffentlichungstag und Bekanntmachung des Hinweises auf die Patenterteilung: **09.08.2017**
(21) Anmeldenummer: 14756058.5
(22) Anmeldetag: 29.08.2014
(51) Int. Cl.: A01N 37/50, A01N 43/653, A01P 3/00, A01N 43/88, A01N 47/04, A01N 47/34, A01N 37/46

(54) **VERWENDUNG FUNGIZIDER WIRKSTOFFE ZUR KONTROLLE VON CHALARA FRAXINEA AN ESCHENBÄUMEN**
USE OF FUNGICIDAL AGENTS FOR CONTROLLING CHALARA FRAXINEA ON ASH TREES
UTILISATION DE PRINCIPES ACTIFS FONGICIDES POUR CONTRÔLER DES CHALARA FRAXINEA SUR DES FRÊNES

(30) Priorität: 03.09.2013 EP 13182859
(43) Veröffentlichungstag der Anmeldung: 13.07.2016
(73) Patentinhaber: Bayer CropScience AG, 40789 Monheim (DE)
(72) Erfinder: BRAUN, Christoph Andreas, 40627 Düsseldorf (DE); HADLOW, James, Newmarket Suffolk CB8 9DJ (GB); FLIND, Andrew, Saffron Walden Essex CB11 3LE (GB)
(74) Vertreter: BIP Patents
(86) Internationale Anmeldenummer: PCT/EP2014/068328
(87) Internationale Veröffentlichungsnummer: WO 2015/032692

(56) Entgegenhaltungen:
- EP-A1- 2 377 397
- WO-A1-2013/160670
- "Shortlist of products for testing against Chalara fraxinea", , 20. März 2013 (2013-03-20), Seiten 1-2, XP055088049, United Kingdom Gefunden im Internet: URL:http://www.fera.defra.gov.uk/plants/pl antHealth/pestsDiseases/documents/fungicid eListForScreening20March2013.pdf [gefunden am 2013-11-13]
- "COST ACTION FP1103 FRAXBACK", 1ST MC/WG MEETING, 13. November 2012 (2012-11-13), Seiten 1-45, XP055088052, Vilnius, Lithuania
- "Ash dieback disease", , 1. April 2012 (2012-04-01), Seiten 1-2, XP055088053, United Kingdom Gefunden im Internet: URL:http://www.forestry.gov.uk/pdf/pest-al ert-ash-dieback-2012.pdf/$FILE/pest-alert- ash-dieback-2012.pdf [gefunden am 2013-11-13]
- Chalara Fraxinea: "Rapid assessment of the need for a detailed Pest Risk Analysis for Chalara fraxinea", , 9. August 2012 (2012-08-09), Seiten 1-15, XP055088153, United Kingdom Gefunden im Internet: URL:http://www.fera.defra.gov.uk/plants/pl antHealth/pestsDiseases/documents/chalaraF raxinea.pdf [gefunden am 2013-11-13]
- P N Wood ET AL: "SUPPRESSION OF VENTURIA INAEQUALIS (APPLE SCAB) ASCOSPORE PRODUCTION USING AUTUMN-APPLIED FUNGICIDES", New Zealand Plant Protection, 1. Januar 2008 (2008-01-01), Seiten 54-58, XP055088158, Gefunden im Internet: URL:http://www.nzpps.org/journal/61/nzpp_6 10540.pdf [gefunden am 2013-11-13]
- "Pesticide Fact Sheet: trifloxystrobin", , 20. September 1999 (1999-09-20), Seiten 1-12, XP055088059, United States of America Gefunden im Internet: URL:http://www.epa.gov/opp00001/chem_searc h/reg_actions/registration/fs_PC-129112_20 -Sep-99.pdf [gefunden am 2013-11-13]
- "European Cooperation in Science and Technology Action FP1103 FRAXBACK", 4TH MC MEETING & WORKSHOP "FRONTIERS IN ASH DIEBACK RESEARCH",, 4. September 2013 (2013-09-04), Seiten 1-42, XP055088047, Sankt Gertrud Konferens, Malmö, Sweden

## Beschreibung

Die vorliegende Erfindung betrifft die Verwendung von spezifischen fungiziden Wirkstoffen alleine oder in Kombination zur Kontrolle von *Chalara fraxinea* bei Eschenbäumen und ein Verfahren zur Anwendung dieser spezifischen fungiziden Wirkstoffe zur Kontrolle von besagtem Pilz im Bereich des Pflanzenschutzes und Materialschutzes.

Heimische Eschen werden durch den Pilz *Hymenoscyphus pseudoalbidus* in jüngster Zeit massiv in ihrer Verbreitung und Entwicklung beeinträchtigt. Der Verursacher des Eschentriebsterbens, auch "Falsches Weißes Stengelbecherchen" genannt, hat sich mittlerweile in 22 Ländern Nord-, Ost- und Mitteleuropas etabliert und ist in vielen Bereichen flächendeckend in den Eschenbeständen anzutreffen.

Der Erreger des Eschentriebsterbens, den Schlauchpilz *Hymenoscyphus pseudoalbidus* und seine zugehörige anamorphe Form *Chalara fraxinea* gefährden den Eschenbaumbestand in großen Teilen Europas. Erste Meldungen der Krankheit stammen aus Polen und dem Baltikum. Im Jahr 2002 waren in Litauen über 30.000 Hektar, welches bereits 60 Prozent aller dortigen Eschenflächen entspricht, vom Eschentriebsterben betroffen.

Das Eschentriebsterben durch den Befall mit *Chalara fraxinea* ist vom Typus zunächst eine Erkrankung der Blätter und grünen Triebe, später auch der verholzten Teile, wobei von den inneren Geweben nicht primär die Gefäße, sondern vor allem das Parenchym der Holzstrahlen und das Mark besiedelt werden. *Chalara fraxinea* infiziert im Sommer grüne Blätter, dringt über die Blattstiele in gesunde Zweige ein und besiedelt das Holzgewebe. Dort verursacht er diffuse Holzverfärbungen sowie Rindennekrosen. Befallene Triebe weisen gelblich-ockerfarben bis rostrot marmorierte Rindenverfärbungen auf. Durch das Absterben der infizierten Blätter und Triebe kommt es zur Verlichtung der Krone. Die auffälligen Rindennekrosen, die mitunter auch an eine Rindenbranderkrankung erinnern, sind eher ein sekundärer Schaden durch das Absterben lebender Rinde und des Kambiums. Die Erkrankung wird auch als "Eschensterben" oder "Eschenwelke" bezeichnet.

Im Stand der Technik werden bereits Produkte zur Bekämpfung von *Chalara fraxinea* empfohlen, darunter Triazole wie z.B. Cyproconazole oder Prothioconazole oder SDHI/Triazole-Gemische wie beispielsweise Prothioconazole in Kombination mit Bixafen oder Fluoxastrobin (link:*http:*//*www*.*fera*.*defra*.*gov*.*uk*/*plants*/*plantHealth*/*pestsDiseases*/*chalaralnfo*.*cfm*). Jedoch fehlt es nach wie vor an wirksamen Wirkstoffkombinationen zur Behandlung erkrankter Eschen oder zur präventiven Behandlung der Bäume.

Die Aufgabe der vorliegenden Erfindung umfasst somit die Identifizierung geeigneter fungizider Wirkstoffe, deren Derivate und deren Kombinationen zur erfolgreichen Bekämpfung des Eschentriebsterbens, welches durch den Pilz *Chalara fraxinea* hervorgerufen wird.

Es wurde nun gefunden, dass die Verwendung von Trifloxystrobin oder Trifloxystrobin-haltigen Wirkstoffkombinationen, die eine oder mehrere weitere fungiziden Verbindungen enthalten, für eine erfolgreiche Kontrolle des Pilzes *Chalara fraxinea* geeignet sind.

Gegenstand der vorliegenden Erfindung ist somit die Verwendung von Trifloxystrobin alleine oder in einer Wirkstoffkombination, zur Kontrolle von *Chalara fraxinea,* an Eschenbaumgewächsen.

In einer bevorzugten Ausgestaltung der vorliegenden Erfindung enthält die Wirkstoffkombination Trifloxystrobin sowie mindestens einen weiteren Wirkstoff (B) ausgewählt aus Cyproconazole, Difenoconazole, Epoxiconazole, Fluquinconazole, Metconazole, Propiconazole, Prothioconazole, Spiroxamine, Tebuconazole, Benzovindiflupyr, Bixafen, Fluopyram, Fluxapyroxad, Isopyrazam, Penflufen, Penthiopyrad, Sedaxane, Azoxystrobin, Fluoxastrobin, Pyraclostrobin, Thiophanate-methyl, Captan, Chlorothalonil, Kupferoxychloride, Kupferhydroxid, Mancozeb, Propineb, Schwefel, Metalaxyl, Mefenoxam, Cymoxanil, Fosetyl-aluminium, Triazoxide oder 2,6-dimethyl-1H,5H-[1,4]dithiino[2,3-c:5,6-c']dipyrrole-1,3,5,7(2H,6H)-tetrone.

In einer besonders bevorzugten Ausführungsform der vorliegenden Erfindung enthält die Wirkstoffkombination Trifloxystrobin sowie mindestens einen weiteren Wirkstoff (B) ausgewählt aus Cyproconazole, Propiconazole, Prothioconazole, Tebuconazole, Metalaxyl, Captan, Thiophanate-methyl, Fluoxastrobin oder Cymoxanil. Im Rahmen dieser ersten Ausgestaltung ist ganz besonders die Verwendung von Cyproconazole oder Tebuconazole bevorzugt.

Insbesondere werden in der Ausführungsform der vorliegenden Erfindungen die folgenden Wirkstoffkombinationen verwendet:
Trifloxystrobin und Cyproconazole; oder
Trifloxystrobin und Tebuconazole.

In einer weiteren Ausführungsform der erfindungsgemäßen Verwendung enthält die Wirkstoffkombination neben Trifloxystrobin als weiteren fungiziden Wirkstoff (B) Prothioconazole sowie als einen dritten Wirkstoff (C) Bixafen.

Sind die Wirkstoffe in einem bestimmten Mischungsverhältnis in den Wirkstoffkombinationen der vorliegenden Erfindung enthalten, ist der synergistische Effekt besonders ausgeprägt. Trotzdem können die Mischungsverhältnisse der Wirkstoffe in den Wirkstoffkombinationen innerhalb eines relativ weiten Bereichs variiert werden.

In den Wirkstoffkombinationen der vorliegenden Erfindung liegen die Wirkstoffe (A) und (B) in einem synergistisch effektiven Verhältnis von A:B in einem Bereich von 100:1 zu 1:100, bevorzugt in einem Verhältnis von 50:1 zu 1:50 und besonders bevorzugt in einem Verhältnis von 20:1 zu 1:20 vor. Weitere Mischungsverhältnisse von A:B, die gemäß der vorliegenden Erfindung Verwendung finden können, in aufsteigender Präferenz, sind: 95:1 zu 1:95, 90:1 zu 1:90, 85:1 zu 1:85, 80:1 zu 1:80, 75:1 zu 1:75, 70:1 zu 1:70, 65:1 zu 1:65, 60:1 zu 1:60, 55:1 zu 1:55, 45:1 zu 1:45, 40:1 zu 1:40, 35:1 zu 1:35, 30:1 zu 1:30, 25:1 zu 1:25, 15:1 zu 1:15, 10:1 zu 1:10, 5:1 zu 1:5, 4:1 zu 1:4, 3:1 zu 1:3, 2:1 zu 1:2.

Trifloxystrobin mit dem chemischen Namen Methyl-α-(methoxyimino)-2-[[[[1-[3-(trifluoromethyl)phenyl]ethylidene]amino]oxy]methyl]-benzeneacetat und geeignete Verfahren zu dessen Herstellung, sind ausgehend von kommerziell zugänglichen Ausgangsstoffen in EP-A 0 460 575 beschrieben.

Tebuconazole mit dem chemischen Namen (+-)-α-[2-(4-Chlorophenyl)ethyl]-α-(1,1-dimethylethyl)-1H-1,2,4-triazole-1-ethanol und geeignete Verfahren zu dessen Herstellung, sind ausgehend von kommerziell zugänglichen Ausgangsstoffen in EP-A 040 345 beschrieben.

Cyproconazole mit dem chemischen Namen α-(4-Chlorophenyl)- α-(1-cyclopropylethyl)-1H-1,2,4-triazole-1-ethanol und geeignete Verfahren zu dessen Herstellung, sind ausgehend von kommerziell zugänglichen Ausgangsstoffen in DE-A 34 06 993 beschrieben.

Die Verwendung der genannten Fungizide zur Kontrolle des Pilzes *Chalara fraxinea* Eschenbaumgewächsen weist gegenüber den aus dem Stand der Technik bekannten Stoffen bzw. Behandlungsmethoden folgende Vorteile auf: Erfindungsgemäß wird eine gute Wirksamkeit erreicht, die erfindungsgemäß vorgesehenen Wirkstoffe haben gute öko- und sonstige toxikologische Eigenschaften und zeigen keine unakzeptablen Auswirkungen auf die unmittelbare Umgebung der Eschenbäume.

Die erfindungsgemäß vorgesehenen Wirkstoffe können in üblichen Formulierungen verwendet werden. So kann die Wirkstoffzusammensetzung beispielsweise in Form einer Suspension, Emulsion, Lösung, Pulver, Schaum, Paste, in Form von Granulate bzw. Feinstpartikel, als Aerosole oder Feinstverkapselungen verwendet werden.

Die erfindungsgemäß vorgesehene Verwendung der fungiziden Wirkstoffe erfolgt bevorzugt mit einer Dosierung zwischen 0,01 und 5 kg/ha besonders bevorzugt zwischen 0,1 und 3 kg/ha, insbesondere bevorzugt zwischen 0,5 und 2 kg/ha.

Die erfindungsgemäße Verwendung eignet sich darüber hinaus auch zum Schutz vor der Wiederverkeimung von Eschengewächsen, die zwischenzeitlich keimfrei sind. Insoweit kann die erfindungsgemäße Verwendung der Wirkstoffkombination zur therapeutischen und/oder präventiven Behandlung von Eschenbaumgewächsen eingesetzt werden. Auch ist durch die vorliegende Erfindung ein wirkungsvoller Schutz vor Infektion nach einem Zuschnitt der Esche möglich; dieses gilt insbesondere für etwaige Infektionen über die Schnittfläche.

Besonders bevorzugt werden erfindungsgemäß Eschenpflanzen der jeweils handelsüblichen oder in Gebrauch befindlichen Eschensorten behandelt. Unter Eschensorten versteht man jedoch auch Eschenpflanzen mit neuen Eigenschaften ("Traits"), die sowohl durch konventionelle Züchtung, durch Mutagenese oder mit Hilfe rekombinanter DNA-Techniken gezüchtet worden sind. Im Rahmen der vorliegenden Erfindung können auch Eschenpflanzen behandelt werden, die durch konventionelle Züchtungs- und Optimierungsmethoden oder durch biotechnologische und gentechnologische Methoden oder Kombinationen dieser Methoden erhalten werden können, einschließlich der transgenen Eschenpflanzen und einschließlich der durch Sortenschutzrechte schützbaren oder nicht schützbaren Eschenpflanzen.

Im Rahmen der vorliegenden Erfindung können auch genetisch modifizierten Organismen (GMOs) behandelt werden. Genetisch modifizierte Eschenpflanzen (oder transgene Eschenpflanzen) sind Pflanzen, bei denen ein heterologes Gen stabil in das Genom integriert worden ist. Der Begriff "heterologes Gen" bedeutet im Wesentlichen ein Gen, das außerhalb der Eschenpflanzen bereitgestellt oder assembliert wird und das bei Einführung in das Zellkerngenom, das Chloroplastengenom oder das Mitochondriengenom der transformierten Pflanze dadurch neue oder verbesserte agronomische oder sonstige Eigenschaften verleiht, dass es ein interessierendes Protein oder Polypeptid exprimiert oder dass es ein anderes Gen, das in der Pflanze vorliegt bzw. andere Gene, die in der Pflanze vorliegen, herunter reguliert oder abschaltet (zum Beispiel mittels Antisense-Technologie, Cosuppressionstechnologie oder RNAi-Technologie [RNA Interference]). Ein heterologes Gen, das im Genom vorliegt, wird ebenfalls als Transgen bezeichnet. Ein Transgen, das durch sein spezifisches Vorliegen im Pflanzengenom definiert ist, wird als Transformations- bzw. transgenes Event bezeichnet.

Zu Eschenpflanzen und Eschenpflanzensorten, die bevorzugt erfindungsgemäß behandelt werden, zählen alle Eschenpflanzen, die über Erbgut verfügen, das diesen Eschenpflanzen besonders vorteilhafte, nützliche Merkmale verleiht (egal, ob dies durch Züchtung und/oder Biotechnologie erzielt wurde).

Eschenpflanzen und Eschenpflanzensorten, die ebenfalls erfindungsgemäß behandelt werden können, sind solche Eschenpflanzen, die gegen einen oder mehrere abiotische Stressfaktoren resistent sind. Zu den abiotischen Stressbedingungen können zum Beispiel Dürre, Kälte- und Hitzebedingungen, osmotischer Stress, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Eschenpflanzen und Eschenpflanzensorten, die ebenfalls erfindungsgemäß behandelt werden können, sind solche Eschenpflanzen, die durch erhöhte Ertragseigenschaften gekennzeichnet sind. Ein erhöhter Ertrag kann bei diesen Eschenpflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und veränderter Abreife beruhen. Der Ertrag kann weiterhin durch eine verbesserte Pflanzenarchitektur (unter Stress- und nicht-Stress-Bedingungen) beeinflusst werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen, Holzqualität (z.B. Festigkeit und Elastizität) sowie Standfestigkeit.

Eschenpflanzen, die erfindungsgemäß ebenfalls behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Streßfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen (d. h. mechanischem Entfernen der männlichen Geschlechtsorgane bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, da man von den Hybridpflanzen ernten will, um die Samen handelt, ist es üblicherweise günstig, sicherzustellen, dass die Pollenfertilität in Hybridpflanzen, die die für die Pollensterilität verantwortlichen genetischen Determinanten enthalten, völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 1992/005251, WO 1995/009910, WO 1998/27806, WO 2005/002324, WO 2006/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 1991/002069).

Im Rahmen der vorliegenden Erfindung kann der fungizide Wirkstoff in seinen handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, weiteren Fungiziden, wachstumsregulierenden Stoffen, Herbiziden, Safenern und/oder Düngemitteln vorliegen.

Der erfindungsgemäß zu verwendende Wirkstoff kann dabei in üblichen Formulierungen verwendet werden, wie Lösungen, Emulsionen, Spritzpulver, wasser- und ölbasierte Suspensionen und Suspensions-Emulsions-Konzentrate.

Im Rahmen der vorliegenden Erfindung ist es insbesondere bevorzugt, wenn der erfindungsgemäß vorgesehene Wirkstoff in der Form einer Sprühformulierung, Drip/Drench-Formulierung vorliegt oder in einer Injektion in den Stamm angewendet wird.

Entsprechende Formulierungen und deren Bestandteile sind dem Fachmann an sich bekannt.

Des Weiteren betrifft die vorliegende Erfindung ein Verfahren zur Anwendung der zuvor beschriebenen spezifischen fungiziden Wirkstoffe zur Kontrolle von *Chalara fraxinea* im Bereich des Pflanzenschutzes und Materialschutzes.

Das erfindungsgemäße Verfahren ist insbesondere dadurch gekennzeichnet, dass die Kontrolle von Mykosen präventiv und/oder therapeutisch erfolgen kann.

Das erfindungsgemäße Verfahren ist ferner insbesondere dadurch gekennzeichnet, dass man einen oder mehrere der zuvor bezeichneten fungiziden Wirkstoffe auf Eschenbaumgewächse, ihre oberirdischen und/oder unterirdischen Bestandteile, deren Lebensraum und/oder Lagerraum und/oder Erntegut ausbringt.

Unter Bestandteile von Pflanzen bzw. Eschengewächsen sind oberirdische und unterirdische Pflanzenteile zu verstehen. Unterirdische Pflanzenteile sind Wurzel, Rhizome, Knollen, Stecklinge, Ableger, Samen, Saatgut und Boden und zu den oberirdische Pflanzenteilen gehören Stamm, Rinde, Spross, Blatt, Blüte, Früchte, Fruchtkörper, Stengel, Äste. Des Weiteren kann die erfindungsgemäße Wirkstoffzusammensetzung ebenfalls auf das Erntegut, dem vegetativen und generativen Vermehrungsmaterial aufgebracht werden.

Die Art der Verwendung ist variabel und kann durch direkte oder indirekte Anwendung an der Pflanze, der Umgebung, dem Lebensraum und/oder dem Lagerraum erfolgen. Mögliche Applikationen sind zum Beispiel als Blattapplikation, Beizmittel, Sprühen, Schleudern, Gießen, Beimischen, Streuen, Vernebeln, Streichen, Verdampfen, Tauchen, Aufstreichen, Injizieren, Umhüllen bzw. Be- oder Überschichten von Pflanzenteilen denkbar. Auch eine Druck-Injektion in entsprechende Eschengewächse ist möglich. (Besonders bevorzugt sind "soil drenching" und "trunk injection")

Zum Beispiel kann die Wirkstoffzusammensetzung in oder unter die Rinde injiziert werden, um die Pflanze herum auf den Boden (Erdreich, Sand-, Kies-, Gestein-, Lehm- oder Mischboden) gegossen oder aufgesprüht werden. Eine weitere Anwendungsform ist das Aufsprühen auf die Pflanze und ihre Pflanzenteile. In trockener Form kann die Wirkstoffzusammensetzung dem Bodenmaterial (Erdreich, Sand-, Kies-, Gestein-, Lehm- oder Mischboden) und/oder den Samen beigemischt werden. Sowohl in trockener wie auch flüssiger Form kann die erfindungsgemäße Wirkstoffzusammensetzung dem Bewässerungssystem zugeführt werden. Die Anwendungsform kann individuell an die örtlichen Gegebenheiten und Anforderungen angepasst werden.

Die vorliegende Erfindung eignet sich zur Behandlung beliebiger Eschenbaumkulturen. Insbesondere geeignete Eschenkulturen sind Eschen
(1) der Untergattung (Sektion):
   - Sektion *Dipetalae*:
      ∘ Einblättrige Esche (*Fraxinus anomala* Torr. ex S.Watson)
      ∘ *Fraxinus dipetala* Hook. & Am.
      ∘ Blau-Esche (*Fraxinus quadrangulata* Michx.)
   - Sektion *Fraxinus:*
      ∘ Schmalblättrige Esche (*Fraxinus angustifolia* Vahl)
      ∘ Gemeine Esche (*Fraxinus excelsior* L.)
      ∘ Mandschurische Esche (*Fraxinus mandshurica* Rupr.)
      ∘ Schwarz-Esche (*Fraxinus nigra* Marshall)
      ∘ Behaarte Esche (*Fraxinus pallisiae* Wilmott ex Pallis, Synonym: *Fraxinus holotricha* Koehne)
      ∘ Breitstielige Esche (*Fraxinus platypoda* Oliv.)
      ∘ Fluss-Esche (*Fraxinus sogdiana* Bunge, Syn.: *Fraxinus potamophila* Herder)
   - Sektion *Melioides*:
      ∘ *Fraxinus albicans* Buckley
      ∘ Weiß-Esche (*Fraxinus americana* L., Syn.: *Fraxinus biltmoreana* Beadle)
      ∘ *Fraxinus berlandieriana* DC.
      ∘ *Fraxinus caroliniana* Mill.
      ∘ Oregon-Esche (*Fraxinus latifolia* Benth.)
      ∘ *Fraxinus papillosa* Lingelsh.
      ∘ Rot-Esche oder Grün-Esche (*Fraxinus pennsylvanica* Marshall)
      ∘ *Fraxinus profunda* (Bush) Bush
      ∘ *Fraxinus uhdei* (Wenz.) Lingelsh.
      ∘ Arizona-Esche (*Fraxinus velutina* Torr.)
   - Sektion *Ornus*:
      ∘ *Fraxinus apertisquamifera* H.Hara
      ∘ *Fraxinus baroniana* Diels
      ∘ Bunges Blumen-Esche (*Fraxinus bungeana* DC.)
      ∘ *Fraxinus chinensis* Roxb. (Syn.: *Fraxinus caudata* J.L.Wu, *Fraxinus japonica* Blume ex K.Koch, *Fraxinus rhynchophylla* Hance)
      ∘ *Fraxinus ferruginea* Lingelsh.
      ∘ *Fraxinus floribunda* Wall.
      ∘ *Fraxinus griffithii* C.B.Clarke
      ∘ *Fraxinus insularis* Hemsl. (Syn.: *Fraxinus retusa* Champ. ex Benth.)
      ∘ Wollflaumige Esche (*Fraxinus lanuginosa* Koidz.)
      ∘ Langspitzige Esche (*Fraxinus longicuspis* Sieb. & Zucc.)
      ∘ *Fraxinus malacophylla* Hemsl. (Syn.: *Fraxinus retusifoliolata* K.M.Feng ex P.Y.Bai)
      ∘ *Fraxinus micrantha* Lingelsh.
      ∘ *Fraxinus odontocalyx* Hand.-Mazz. ex E.Peter
      ∘ Manna-Esche oder Blumen-Esche (*Fraxinus ornus* L.)
      ∘ Chinesische Blumen-Esche (*Fraxinus paxiana* Lingelsh.)
      ∘ *Fraxinus raibocarpa* Regel
      ∘ Siebolds Blumen-Esche (*Fraxinus sieboldiana* Blume) (Syn.: *Fraxinus mariesü* Hook. f.)
      ∘ *Fraxinus stylosa* Lingelsh.
      ∘ *Fraxinus trifoliolata* W.W.Sm.
   - Sektion *Pauciflorae:*
      ∘ *Fraxinus dubia* (Willd. ex Schult. & Schult. f.) P.S.Green & M.Nee
      ∘ *Fraxinus gooddingii* Little
      ∘ *Fraxinus greggü* A.Gray
      ∘ *Fraxinuspurpusii* Brandegee (Syn.: *Fraxinus bicolor* Standl. & Steyerm., *Fraxinus vellerea* Standl. & Steyerm.)
      ∘ *Fraxinus rufescens* Lingelsh.
   - Sektion *Sciadanthus*:
   - *Fraxinus dimorpha* Coss. & Durieu
   - *Fraxinus hubeiensis* S.Z.Qu et al.
   - Afghanische Esche *(*F*raxinus xanthoxyloides* (G.Don) Wall. ex DC.)

Bevorzugt wird die erfindungsgemäß verwendete Wirkstoffkombination zur Behandlung von Eschengewächsen der Untergattung (Sektion) *Fraxinus* wie beispielsweise die Schmalblättrige Esche (*Fraxinus angustifolia* Vahl), die Gemeine Esche (*Fraxinus excelsior* L.), die Mandschurische Esche (*Fraxinus mandshurica* Rupr.), die Schwarz-Esche (*Fraxinus nigra* Marshall), die Behaarte Esche (*Fraxinus pallisiae* Wilmott ex Pallis, Synonym: *Fraxinus holotricha* Koehne), die Breitstielige Esche (*Fraxinus platypoda* Oliv.), oder die Fluss-Esche (*Fraxinus sogdiana* Bunge, Syn.: *Fraxinus potamophila* Herder) eingesetzt. Besonders bevorzugt wird die erfindungsgemäß verwendete Wirkstoffkombination zur Behandlung von Eschengewächsen der Untergattung (Sektion) der Gemeinen Esche *(Fraxinus excelsior*) eingesetzt.

Die vorliegende Erfindung wird anhand der nachfolgenden Beispiele näher erläutert.

### Beispiele:

### In vitro-Test zur Berechnung des ED50-Wertes mit Chalara fraxinea

Mikrotiterplatten mit 96 Kavitäten werden mit 100µl einer Lösung der Testverbindung gefüllt.

Folgende Testverbindungen wurden verwendet:
- Aviator Xpro^{®} (Bixafen 75 g/l & Prothioconazole 150 g/l EC),
- Sphere^{®} (Cyproconazole 80 g/l & Trifloxystrobin 187.5 g/l EC),
- Nativo^{®} (Trifloxystrobin 100 g/l & Tebuconazole 200 g/l EC),
- Rovral Aquaflo^{®} (Iprodione 500 g/l SC) hergestellt und verdünnt mit PDB (Kartoffel-Dextrose-Boullion),
- Cyproconazole, Tolylfluanid und Trifloxystrobin jeweils gelöst in Methanol und verdünnt mit PDB.

Im nächsten Schritt werden in jede Kavität der Mikrotiterplatte 100µl flüssiges PDB gegeben, welches mit einer entsprechenden Konzentration einer Myzel Suspension des Testfungus (gewachsen in Malzbouillon) ergänzt wird.

Die Endkonzentration der Testverbindung in den Kavitäten der Mikrotiterplatten sind 30, 6, 1.2, 0.24, 0.048 und 0.0096 ppm. Mit der Hilfe eines Photometers wird die Extinktion in allen Kavitäten mit einer Wellenlänge von 620 nm gemessen. Die Mikrotiterplatten werden dann für 5 bis 8 Tage und bei 85 % relativer Luftfeuchtigkeit in einen Schüttelapparat überführt.

Am Ende der Inkubationszeit wird das Wachstum des Testfungus *Chalara fraxinea* wieder photometrisch mit einer Wellenlänge von 620 nm gemessen. Die Differenz zwischen den beiden Extinktionswerten (aufgenommen vor und nach der Inkubation) ist proportional zum Wachstum des Testorganismus.

Basierend auf den A-Extinktionswerten aus den verschiedenen Testkonzentrationen und den der unbehandelten Testorganismen (Kontrolle) wird eine Dosis-Wirkungs-Kurve berechnet. Die Konzentration, die notwendig ist eine 50% Wachstumsreduktion zu erzielen, wird definiert und beschrieben als ED50-Wert (= Effektive Dosis, die zu 50 % Wachstumsreduktion führt) in ppm (= mg/1).

**Tabelle 1: ED50-Werte der getesteten Wirkstoffe bzw. Wirkstoffkombinationen**

| **Wirkstoff/-kombination (erfindungsgemäß)** | **ED50-Wert** |
|---|---|
| Sphere® | 0.02ppm |
| Nativo® | 0.025ppm |
| Trifloxystrobin | 0.028ppm |

| **Vergleichsbeispiele** | |
|---|---|
| Aviator Xpro® | 0.094ppm |
| Cyproconazole | 0.49ppm |
| Rovral Aquaflo® | 2.71ppm |
| Tolylfluanid | 0.4ppm |

Die Trifloxystrobin-haltigen Mischungen sowie Trifloxystrobin selber zeigen eine exzellente Wirksamkeit bei der Kontrolle von *Chalara fraxinea.* Cyprocoanzole dagegen zeigt eine deutlich schlechtere Wirksamkeit.

## Patentansprüche

1. Verwendung von Trifloxystrobin alleine oder in einer Wirkstoffkombination, zur Kontrolle von *Chalara fraxinea,* an Eschenbaumgewächsen.

2. Verwendung gemäß Anspruch 1, **dadurch gekennzeichnet, dass** die Wirkstoffkombination Trifloxystrobin sowie mindestens einen weiteren Wirkstoff (B) ausgewählt aus Cyproconazole, Propiconazole, Prothioconazole, Tebuconazole, Metalaxyl, Captan, Thiophanate-methyl, Fluoxastrobin oder Cymoxanil enthält.

3. Verwendung gemäß Anspruch 1, **dadurch gekennzeichnet, dass** die Wirkstoffkombinationen Trifloxystrobin sowie Cyproconazole oder Tebuconazole enthalten.

4. Verwendung gemäß Anspruch 1, **dadurch gekennzeichnet, dass** die Wirkstoffkombination zur therapeutischen und/oder präventiven Behandlung von Eschenbaumgewächen eingesetzt wird.

5. Verwendung gemäß Anspruch 1, **dadurch gekennzeichnet, dass** die Wirkstoffkombination in der Form einer Sprühformulierung, Drip/Drench-Formulierung vorliegt oder als eine Injektion in den Stamm angewendet wird.

6. Verwendung gemäß Anspruch 1, **dadurch gekennzeichnet, dass** die Wirkstoffkombination zur Behandlung von Eschengewächsen der Untergattung (Sektion) *Fraxinus* wie beispielsweise die Schmalblättrige Esche (*Fraxinus angustifolia* Vahl), die Gemeine Esche (*Fraxinus excelsior* L.), die Mandschurische Esche (*Fraxinus mandshurica* Rupr.), die Schwarz-Esche (*Fraxinus nigra* Marshall), die Behaarte Esche (*Fraxinus pallisiae* Wilmott ex Pallis, Synonym: *Fraxinus holotricha* Koehne), die Breitstielige Esche (*Fraxinus platypoda* Oliv.), oder die Fluss-Esche (*Fraxinus sogdiana* Bunge, Syn.: *Fraxinus potamophila* Herder) eingesetzt wird.

7. Verwendung gemäß Anspruch 1, **dadurch gekennzeichnet, dass** die Wirkstoffkombination zur Behandlung von Eschengewächsen der Untergattung (Sektion) der Gemeinen Esche (*Fraxinus excelsior*) eingesetzt wird.

8. Verwendung gemäß Anspruch 1, **dadurch gekennzeichnet, dass** die Wirkstoffkombination zur Kontrolle von *Chalara fraxinea* im Bereich des Pflanzenschutzes und Materialschutzes eingesetzt wird.

## Claims

1. Use of trifloxystrobin alone or in an active substance combination for controlling *Chalara fraxinea* on ash tree plants.

2. Use according to Claim 1, **characterized in that** the active substance combination contains trifloxystrobin and at least one further active substance (B) selected from among cyproconazole, propiconazole, prothioconazole, tebuconazole, metalaxyl, captan, thiophanate-methyl, fluoxastrobin or cymoxanil.

3. Use according to Claim 1, **characterized in that** the active substance combinations contain trifloxystrobin and cyproconazole or tebuconazole.

4. Use according to Claim 1, **characterized in that** the active substance combination is employed for the therapeutic and/or preventive treatment of ash tree plants.

5. Use according to Claim 1, **characterized in that** the active substance combination is present in the form of a spray formulation, drip/drench formulation or is employed as an injection into the trunk.

6. Use according to Claim 1, **characterized in that** the active substance combination is employed for the treatment of ash plants of the subgenus (section) *Fraxinus* such as, for example, narrow-leaved ash (*Fraxinus angustifolia* Vahl), common ash (*Fraxinus excelsior* L.), Manchurian ash (*Fraxinus mandshurica* Rupr.), black ash (*Fraxinus nigra* Marshall), Pallis' ash (*Fraxinus pallisiae* Wilmott ex Pallis, synonym: *Fraxinus holotricha* Koehne), *Fraxinus platypoda* Oliv. or Tianshan ash (*Fraxinus Sogdiana* Bunge, syn.: *Fraxinus potamophila* Herder).

7. Use according to Claim 1, **characterized in that** the active substance combination is employed for the treatment of ash plants of the subgenus (section) of common ash (*Fraxinus excelsior*).

8. Use according to Claim 1, **characterized in that** the active substance combination is employed for the control of *Chalara fraxinea* in the field of plant protection and the protection of materials.

## Revendications

1. Utilisation de trifloxystrobine seule ou dans une combinaison d'agents actifs, pour le contrôle de *Chalara fraxinea,* sur des frênes.

2. Utilisation selon la revendication 1, **caractérisée en ce que** la combinaison d'agents actifs contient de la trifloxystrobine, ainsi qu'au moins un autre agent actif (B) choisi parmi le cyproconazole, le propiconazole, le prothioconazole, le tébuconazole, le métalaxyle, le captane, le thiophanate-méthyle, la fluoxastrobine ou le cymoxanil.

3. Utilisation selon la revendication 1, **caractérisée en ce que** les combinaisons d'agents actifs contiennent de la trifloxystrobine, ainsi que du cyproconazole ou du tébuconazole.

4. Utilisation selon la revendication 1, **caractérisée en ce que** la combinaison d'agents actifs est utilisée pour le traitement thérapeutique et/ou préventif de frênes.

5. Utilisation selon la revendication 1, **caractérisée en ce que** la combinaison d'agents actifs se présente sous la forme d'une formulation de pulvérisation, d'une formulation de goutte à goutte/arrosage, ou est appliquée sous la forme d'une injection dans le tronc.

6. Utilisation selon la revendication 1, **caractérisée en ce que** la combinaison d'agents actifs est utilisée pour le traitement de frênes du sous-genre (section) *Fraxinus,* tels que par exemple le frêne à feuilles étroites (*Fraxinus angustifolia* Vahl), le frêne commun (*Fraxinus excelsior* L.), le frêne de Manchourie (*Fraxinus mandshurica* Rupr.), le frêne noir (*Fraxinus nigra* Marshall), le frêne de Pallis (*Fraxinus pallisiae* Wilmott ex Pallis, synonyme : *Fraxinus holotricha* Koehne), le frêne à pétiole large (*Fraxinus platypoda* Oliv.) ou le frêne des monts Tian (*Fraxinus sogdiana* Bunge, sen. : *Fraxinus potamophila* Herder).

7. Utilisation selon la revendication 1, **caractérisée en ce que** la combinaison d'agents actifs est utilisée pour le traitement de frênes du sous-genre (section) du frêne commun (*Fraxinus excelsior* L.).

8. Utilisation selon la revendication 1, **caractérisée en ce que** la combinaison d'agents actifs est utilisée pour le contrôle de *Chalara fraxinea* dans le domaine de la protection des plantes et de la protection des matériaux.
